# EUROPÄISCHE PATENTSCHRIFT

(11) **EP 0 555 627 B1**
(45) Veröffentlichungstag und Bekanntmachung des Hinweises auf die Patenterteilung: **08.06.1994**
(21) Anmeldenummer: 93100038.4
(22) Anmeldetag: 05.01.1993
(51) Int. Cl.: B62D 1/18

(54) **Schwenkmechanismus für die Lenkradanordnung eines Fahrzeuges**
Steering wheel tilt mechanism for a vehicle
Mécanisme de pivotement pour le volant d'un véhicule

(30) Priorität: 14.01.1992 US 820465
(43) Veröffentlichungstag der Anmeldung: 18.08.1993
(73) Patentinhaber: DEERE & COMPANY, Moline, Illinois 61265 (US)
(72) Erfinder: Easton, David Joseph, Cedar Falls, Iowa 50613 (US)
(74) Vertreter: Feldmann, Bernhard

(56) Entgegenhaltungen:
- WO-A-91/06461
- DE-A- 3 909 668
- US-A- 4 938 093

## Beschreibung

Die Erfindung betrifft einen Schwenkmechanismus für die Lenkradanordnung eines Fahrzeugs gemäß den Merkmalen des Oberbegriffs des Patentanspruchs 1.

Durch diesen Schwenkmechanismus läßt sich ein oberes Lenksäulenteil um eine horizontale Drehachse gegenüber einem fahrzeugfesten unteren Lenksäulenteil verschwenken, so daß der Fahrzeuglenker eine bequeme Lenksäulenlage einstellen kann. Um die Lenksäule in der gewünschten Lage zu arretieren, ist eine Rasteinrichtung vorgesehen, die ein an das untere Lenksäulenteil gekoppeltes Segmentteil mit einer Verzahnung sowie eine mit dieser Verzahnung manuell in Eingriff bringbare an das obere Lenksäulenteil gekoppelte Sperrklinke umfaßt. Durch Betätigung der Sperrklinke läßt sich diese auf die Verzahnung des Segmentteils zu und von dieser weg bewegen, um das obere Lenksäulenteil wahlweise in verschiedenen Schwenkpositionen relativ zum Segmentteil festzusetzen. Ferner ist eine Gedächtnisfunktion vorgesehen, die es ermöglicht, die Lenksäule weit nach oben zu schwenken, um den Einstieg in das Fahrzeug zu erleichtern, und anschließend wieder in die gewählte Rastlage zurück zu schwenken. Hierbei ist es nicht erforderlich, daß die Bedienungsperson erneut eine bequeme Rastposition auswählt und einstellt.

Es sind eine Reihe von Schwenkmechanismen bekannt, die jedoch meist einen komplizierten Aufbau aufweisen und Teile enthalten, die von der Lenksäule hervorstehen und daher die Lenksäulenanordnung sperrig machen. Beispielsweise beschreibt die US-A-4,938,093 eine Lenksäulenanordnung mit einer Gedächtnisfunktion, die jedoch relativ weit über die Lenksäule hervorsteht und eine Vielzahl von Teilen erforderlich macht. Die schwenkbare Lenksäulenanordnung, die aus der US-A-4,993,279 hervorgeht, hat zwar einen etwas einfacheren Aufbau, weist jedoch keine Gedächtnisfunktion auf. Die US-A-4,527,444 beschreibt eine Anordnung, bei der sich eine Instrumententafel mit der Lenksäule verschwenken läßt, die lediglich die Einstellung eines Neigungswinkels innerhalb eines Bereiches für bequemes Fahren, jedoch kein Verschwenken in eine aufgerichtete Lage, die den Zugang zur Fahrerplattform erleichtert, zuläßt.

Durch die DE-A-29 01 192 ist eine Halterung für ein einstellbares Lenkhandrad für Kraftfahrzeuge mit den eingangs genannten Merkmalen bekannt geworden, die jedoch ebenfalls einen relativ aufwendigen, ausladenden Aufbau unter Verwendung vieler Teile aufweist.

Die der Erfindung zugrunde liegende Aufgabe wird darin gesehen, einen Schwenkmechanismus der eingangs genannten Art anzugeben, bei der die genannten Nachteile vermieden werden und der einen kompakten, einfachen Aufbau unter Verwendung relativ weniger einfacher Teile aufweist und sich kostengünstig herstellen läßt.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Eine bevorzugte Ausgestaltung des erfindungsgemäßen Schwenkmechanismus enthält eine gestreckte Lenksäule mit einem unteren und einem oberen Lenksäulenteil. Der obere Lenksäulenteil wird von einem Konsolenteil getragen und läßt sich um eine Drehachse verschwenken. Auf dem unteren Schwenksäulenteil ist ein Segmentteil angeordnet, das auf seiner einen Seite eine Zahnreihe mit einer Zahnteilung enthält und sich grundsätzlich in Schwenkrichtung gegenüber dem unteren Lenksäulenteil verschieben läßt. Die Zahnteilung ist relativ fein ausgebildet und erlaubt eine feine Einstellung des Schwenkwinkels. Auf der anderen, der Verzahnung gegenüberliegenden Seite trägt das Segmentteil zwei zueinander beabstandete Verriegelungsausnehmungen. Eine manuell bedienbare Sperrklinke ist auf dem oberen Lenksäulenteil und mit diesem verschwenkbar derart angeordnet, daß sie sich zu dem Segmentteil hin und von diesem weg verschieben läßt. Die Sperrklinke weist eine Zahnreihe auf, die mit der Zahnreihe des Segmentteils in Eingriff gebracht und von dieser gelöst werden kann. Hierdurch kann das obere Lenksäulenteil innerhalb eines durch die Auslegung der Länge der Zahnreihen vorgegebenen Bereiches in einer Vielzahl von Schwenkpositionen festgestellt werden, indem bei zunächst voneinander getrennten Verzahnungen das obere Lenksäulenteil in die gewünschte Lage geschwenkt wird und dann durch Verschieben der Sperrklinke die Verzahnungen in Eingriff gebracht werden.

Es ist ferner eine Stange vorgesehen, die durch eine Bedienungsperson in Richtung des Segmentteils und von diesem weg bewegt werden kann und deren Ende mit jeweils einer der Verriegelungsausnehmungen des Segmentteils in Eingriff gebracht werden kann, um das Segmentteil gegenüber dem unteren Lenksäulenteil festzulegen. Wenn die Stange aus einer der Verriegelungsausnehmungen herausgezogen wird, läßt sich die Konsole mit dem oberen Lenksäulenteil und der Sperrklinke als eine Einheit bis zu einer Grenzlage verschwenken, in der die Stange von der anderen Verriegelungsausnehmung aufgenommen wird. Wird die Stange aus dieser Verriegelungsausnehmung gezogen, so läßt sich die Konsole mit dem oberen Lenksäulenteil und der Sperrklinke wieder als eine Einheit zurück in die Ausgangslage verschwenken, in der die Stange wieder von der entsprechenden Verriegelungsausnehmung aufgenommen wird. Eine Feder drückt die Konsole mit dem oberen Lenksäulenteil und der Sperrklinke in die Grenzlage.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht einer erfindungsgemäßen schwenkbaren Lenksäulenanordnung,
- Fig. 2: die gegenüber Fig. 1 vergrößerte Seitenansicht der Lenksäulenanordnung in einer normalen Arbeitsposition,
- Fig. 3: eine Ansicht in Richtung der in Fig. 2 dargestellten Pfeile 3 - 3,
- Fig. 4: eine Schnittdarstellung in Richtung der in Fig. 2 dargestellten Pfeile 4 - 4,
- Fig. 5: die gegenüber Fig. 1 vergrößerte Seitenansicht der Lenksäulenanordnung in einer angehobenen Position,

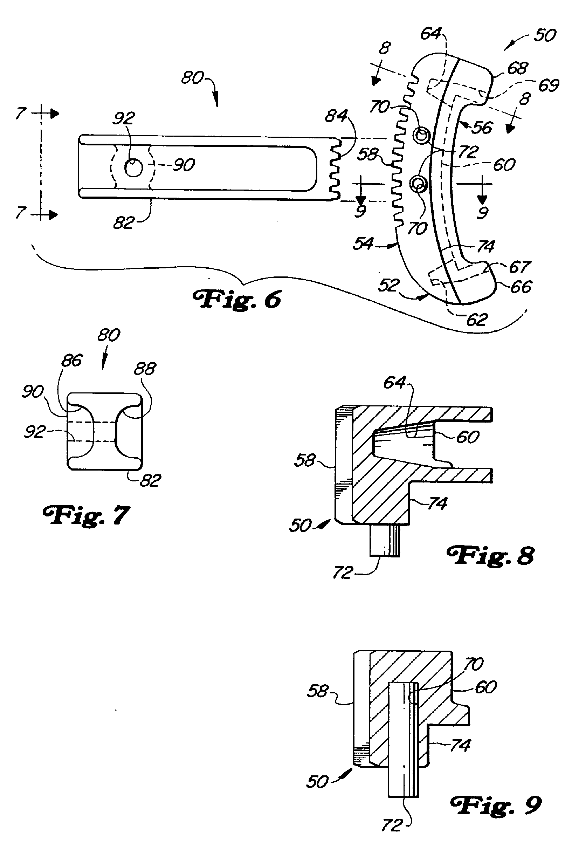

- Fig. 6: die vergrößerte Darstellung einer Sperrklinke und eines Segmentelements der schwenkbaren Lenksäulenanordnung,
- Fig. 7: eine Ansicht in Richtung der in Fig. 6 dargestellten Pfeile 7 - 7,
- Fig. 8: einen Querschnitt in Richtung der in Fig. 6 dargestellten Pfeile 8 - 8 und
- Fig. 9: einen Querschnitt in Richtung der in Fig. 6 dargestellten Pfeile 9 - 9.

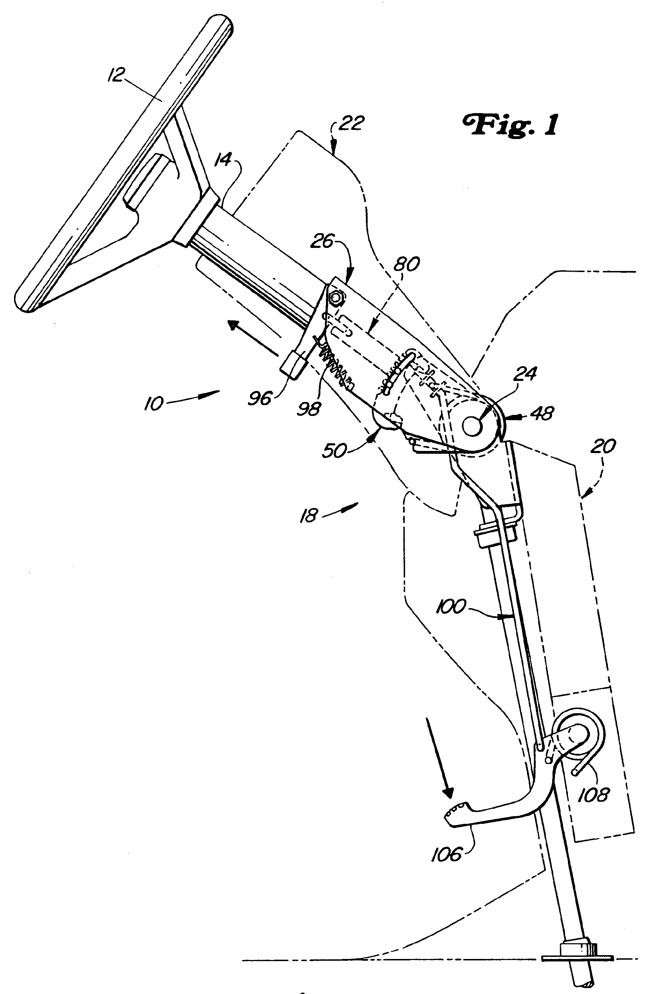

Aus den Figuren 1, 2, 4 und 5 geht eine kippbare Lenksäulenanordnung 10 hervor, die ein Lenkrad 12 enthält, welches an einer sich durch ein Gehäuse 18 erstreckenden Lenkspindel 14 befestigt ist. Die Lenkspindel 14 erstreckt sich durch ein weiter unten liegendes, am Fahrzeug befestigtes Lenksäulenteil 20 und durch ein oberes Lenksäulenteil 22, welches um eine Drehachse 24 verschwenkbar ist. Die Lenkspindel 14 wird von dem unteren Lenksäulenteil 20 getragen. Das untere Lenksäulenteil 20 enthält ein feststehendes Paar von Armen 19, 21, welche sich quer zur Drehachse 24 und nach oben über diese hinaus erstrecken.

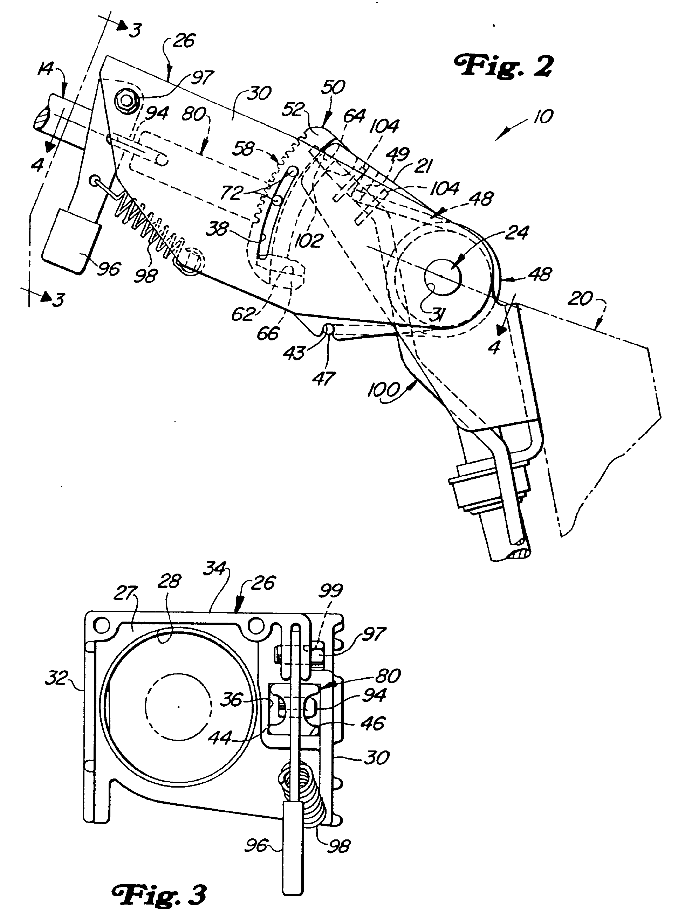

Ein Konsolenteil 26 ist durch übliche, nicht dargestellte Mittel an dem oberen Lenksäulenteil 22 befestigt und ebenfalls um die Drehachse 24 verschwenkbar. Wie aus den Figuren 2 bis 5 hervorgeht, weist das Konsolenteil 26 ein Mittelstück auf, welches eine zentrale Lagerbüchse 27 mit einer Öffnung 28 bildet, die die Lenkspindel 14 aufnimmt. Auf sich gegenüber liegenden Seiten sind beidseits der Lagerbüchse 27 je eine Seitenwange 30, 32 ausgebildet, die miteinander durch eine Querwange 34 verbunden sind. Im Endbereich jeder der beiden Seitenwangen 30, 32 erstreckt sich eine Drehachsenöffnung 31. Zwischen der Öffnung 28 und der Seitenwange 30 erstreckt sich eine Rechtecköffnung 36 durch die Lagerbüchse 27. In der Seitenwange 30 befindet sich ein bogenförmiger Schlitz 38 mit einem Krümmungsradius, dessen Mittelpunkt in der Drehachse 24 liegt. Benachbart zu der Öffnung 28 ist eine Wandung 40 angeformt, die mit der Seitenwange 30 und der Lagerbüchse 27 einen Kanal 42 bildet, der mit der Öffnung 36 zusammenfällt und sich im wesentlichen senkrecht zur Drehachse 24 erstreckt. Ein L-förmiges Führungsglied 44 ist an der Seitenwange 30 und der Querwange 34 derart befestigt, daß die Wangen 30 und 34 mit dem Führungsglied 44 eine Führungsöffnung 46 bilden, die mit der Öffnung 36 fluchtet.

Das eine Ende 47 einer Feder 48 wird von einer Einkerbung 43, die in eine Kante der Seitenwange 32 eingelassen ist, aufgenommen. Das zweite Ende 49 der Feder 48 ist in einen Schlitz 45 eingehängt, der in den Arm 19 eingelassen ist. Die Feder 48 ist vorgespannt, um das Konsolenteil 26 und das obere Lenksäulenteil 22 gemäß der Fig. 1, 2 und 5 im Uhrzeigersinn zu schwenken.

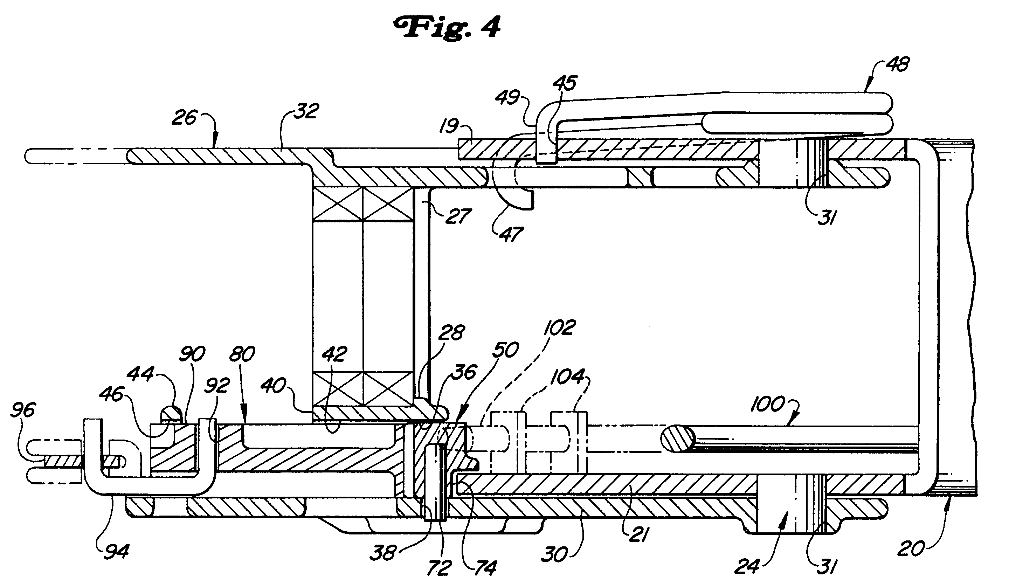

Ein am Arm 19 befestigtes Segmentteil 50 enthält ein bogenförmig ausgebildetes Mittelstück 52, mit einer konvexen Seite 54 und einer konkaven Seite 56. Auf der konvexen Seite 54 ist eine Verzahnung 58 angebracht. Auf der konkaven Seite 56 erstreckt sich zwischen zwei Verriegelungsausnehmungen 62, 64, die sich genau innerhalb zweier Stirnwänden 66, 68 befinden, ein Kanal 60. Die Stirnwände 66, 68 bilden Widerlageroberflächen 67, 69. Senkrecht zu der Krümmungsebene des Segmentteils 50 sind zwei zueinander beabstandete Stiftsackbohrungen 70 eingelassen. In diese Bohrungen 70 sind Stifte 72 eingepreßt. Wie am besten aus Fig. 4 ersichtlich, ist das Segmentteil 50 zwischen der Wandung 40 und der Seitenwange 30 verschiebbar angeordnet, wobei die Stifte 72 innerhalb des Schlitzes 38 geführt werden. Die Verzahnung 58 ist dem Führungsglied 44 zugewandt. Das Segmentteil 50 weist einen Kanal 74 auf, der einen Freiraum für den Arm 21 bildet.

Eine Sperrklinke 80 weist einen länglichen Körper 82 auf, der an seinem einen Ende eine Verzahnung 84 trägt. In dem Körper 82 sind ferner auf sich gegenüberliegenden Seiten je eine sich längs erstreckene Hohlkehle 86, 88 sowie auf einer Seite ein Auge 90 ausgebildet. Durch das Auge 90 erstreckt sich eine Bohrung 92. Wie es am besten aus Fig. 4 hervorgeht, ist die Sperrklinke 80 derart in dem Kanal 42 angeordnet, daß sie sich in dem Kanal 42 und der Führungsöffnung 36 vor und zurück verschieben läßt, so daß ihre Verzahnung 84 sich in die Verzahnung 58 des Segmentes 50 ein- und ausrücken läßt. Ein Zwischenglied 94 verbindet die Sperrklinke 80 mit einem von Hand betätigbaren Hebel 96, so daß durch Betätigung des Hebels 96 die Verzahnung 84 der Sperrklinke 80 in und aus dem Eingriff mit der Verzahnung 58 des Segmentes gebracht werden kann. Der Hebel 96 ist durch eine Schraube 97, die von einer Bohrung 99 in der Seitenwange 32 aufgenommen wird, verschwenkbar an der Seitenwange 30 befestigt. Zwischen dem Hebel 96 und dem Konsolenteil 26 ist eine vorgespannte Feder 98 angeordnet, die den Hebel 96 und damit die Sperrklinke 80 in Eingriffsrichtung zieht.

Zwei an dem Arm 21 befestigte Stangenführungen 104 weisen Bohrungen auf, in denen ein Ende 102 einer länglichen Stange 100 axial verschiebbar geführt wird. Das Ende 102 der Stange 100 kann von jeweils einem der Verriegelungsausnehmungen 62, 64 des Segmentteils 50 aufgenommen werden, so daß es mit der entsprechenden Widerlageroberfläche 67, 69 in Eingriff tritt. Das andere Ende der Stange 100 ist über eine Schwenklagerung an ein durch die Bedienungsperson betätigbares Pedal 106 gekoppelt. Eine Feder 108 greift an dem Pedal 106 an und zieht dieses gemäß Fig. 1 im Uhrzeigersinn, so daß das Ende 102 der Stange 100 in Richtung des Segmentes 50 in die Verriegelungsausnehmungen 62, 64 gedrückt wird.

Die Bedienung wird wie folgt vorgenommen:

Wenn die Lenksäulenanordnung 10 aus der in den Figuren 1 und 2 dargestellten Lage um einen kleinen Betrag innerhalb des Bereiches, der durch die Ausdehnung der Verzahnung 58 definiert ist, verschwenkt werden soll, ist es lediglich erforderlich, das freie Ende des Hebels 96 anzuziehen, wie es in Fig. 1 durch den Pfeil angedeutet ist. Hierdurch wird die Sperrklinke 80 von der Verzahnung 58 des Segments 50 weggezogen, wodurch es möglich wird, die Sperrklinke 80, das Konsolenteil 26, das obere Lenksäulenteil 22, den oberen Teil der Lenkspindel 14 und das Lenkrad 12 um die Drehachse 24 zu verschwenken. Zur gleichen Zeit bleibt das Stangenende 102 in der Verriegelungsausnehmung 64, wodurch ein Verschwenken des Segments 50 um die Schwenkachse 24 verhindert wird. Wenn die neue Schrägstellung eingestellt ist, wird der Hebel 96 losgelassen, und die Feder 98 zieht die Verzahnung 84 der Sperrklinke 80 zurück in den Eingriff mit der Verzahnung 58 des Segments 50, so daß die gewünschte Schrägstellung so beibehalten wird, bis eine neue Schrägstellungslage gewünscht wird und der Hebel 96 erneut angezogen wird.

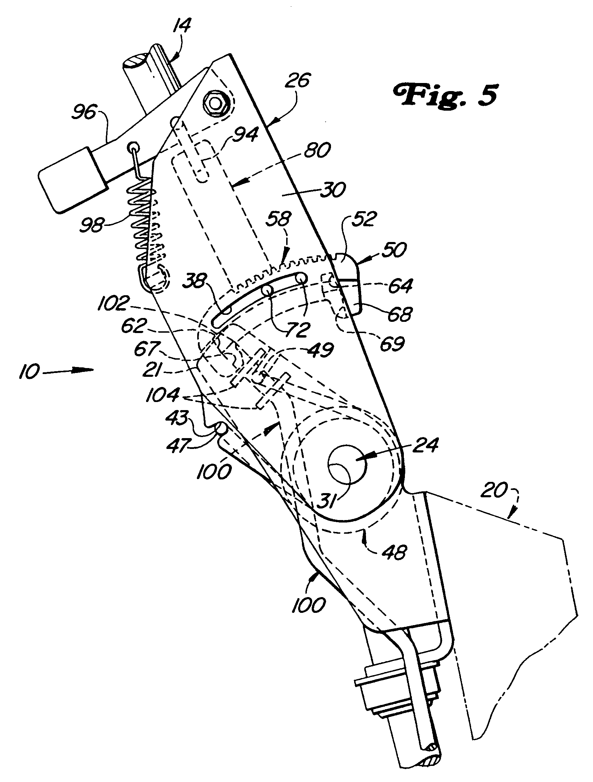

Soll die Lenksäulenanordnung 10 um einen maximalen Betrag, beispielsweise aus der in Fig. 2 dargestellten Lage in die in Fig. 5 dargestellte Lage angehoben werden, so ist es lediglich erforderlich, das freie Ende des Pedals 106 in Richtung des Pfeils herunter zu drücken. Hierdurch wird das Stangenende 102 aus der Verriegelungsausnehmung 64 des Segments 50 gezogen, so daß die Feder 48 die Lenksäulenanordnung 10 mit dem Segment 50, der Sperrklinke 80, dem Konsolenteil 26, dem oberen Teil der Lenkspindel 14 und dem Lenkrad 12 im Uhrzeigersinn um die Drehachse 24 verschwenkt. Die Lenksäulenanordnung 10 verschwenkt sich in dieser Richtung, bis das Stangenende 102 an die Widerlagerfläche 67 der Stirnwand 66 anstößt. Wenn das Pedal 106 losgelassen wurde, gleitet nun das Stangenende 102 in die Verriegelungsausnehmung 62, so daß die Lenksäulenanordnung 10 in ihrer voll aufgerichteten Lage lösbar festgehalten wird. Zur gleichen Zeit bleibt die Verzahnung 84 der Sperrklinke 80 mit der Verzahnung 58 des Segments 50 in Eingriff, so daß eine Relativbewegung zwischen Lenkrad 12 und dem Segment 50 unterbunden wird. Bei erneutem Herunterdrücken des Pedals 106 läßt sich das Lenkrad 12 von Hand gegen die Kraft der Feder 48 und gegen den Uhrzeigersinn zurückschwenken, bis das Stangenende 102 gegen die Widerlagerfläche 69 der Stirnwand 68 stößt und in die Verriegelungsausnehmung 64 gleitet. Bei dieser Stellung nimmt das Lenkrad 12 seine ursprüngliche Stellung ein, da sich die Beziehung zwischen Sperrklinke 80 und dem Segment 50 nicht verändert hat. Das System "erinnert" gleichsam sich somit an seine ursprüngliche Stellung.

## Patentansprüche

1. Schwenkmechanismus für die Lenkradanordnung eines Fahrzeugs
- mit einer Lenksäule, die ein unteres fahrzeugfestes Lenksäulenteil (20) und ein um eine an dem unteren Lenksäulenteil (20) festgelegte horizontale Drehachse (24) verschwenkbares oberes Lenksäulenteil (22) aufweist,
- mit einer Rasteinrichtung, die ein an das untere Lenksäulenteil (20) gekoppeltes Segmentteil (50) mit einer Verzahnung (58) sowie eine mit dieser Verzahnung (58) manuell in Eingriff bringbare an das obere Lenksäulenteil (22) gekoppelte Sperrklinke (80) umfaßt, derart, daß durch Betätigung der Sperrklinke (80) diese auf die Verzahnung (58) des Segmentteils (50) zu und von dieser weg bewegbar ist, um das obere Lenksäulenteil (22) wahlweise in verschiedenen Schwenkpositionen relativ zum Segmentteil (50) festzusetzen,
- und mit einer Verriegelungseinrichtung, durch die sich das obere Lenksäulenteil (22) in wenigstens einer Schwenkposition lösbar festsetzen läßt und bei deren Entriegelung sich auch bei eingerasteter Rasteinrichtung das obere Lenksäulenteil (22) gegenüber dem unteren Lenksäulenteil (20) innerhalb eines definierten Schwenkbereichs verschwenken läßt,
dadurch gekennzeichnet,
- daß das Segmentteil (50) ein erstes Widerlager (69) und ein zu diesem in Schwenkrichtung beabstandetes zweites Widerlager (67) sowie wenigstens eine Verriegelungsausnehmung (64) aufweist, die benachbart zum ersten Widerlager (69) angeordnet ist,
- daß die Verriegelungseinrichtung ein Verriegelungsteil (100) enthält, das durch eine Bedienungsperson auf das Segmentteil (50) zu und von diesem weg bewegbar ist und das mit den Widerlagern (67, 69) und der Verriegelungsausnehmung (64) zusammenwirkt, um das Segmentteil (50) innerhalb des definierten Schwenkbereichs und in ausgewählten Schwenklagen zu halten, und
- daß Federmittel (48) vorgesehen sind, die das Segmentteil (50) und das mit diesem durch die Rasteinrichtung verrastete obere Lenksäulenteil (20) aus einer normalen Lage, in der das Verriegelungsteil (100) in die Verriegelungsausnehmung (64) eingreift, in eine Grenzposition drängen, in der das aus der Verriegelungsausnehmung (64) herausgezogene Verriegelungsteil (100) an dem zweiten Widerlager (67) anliegt.

2. Schwenkmechanismus nach Anspruch 1, dadurch gekennzeichnet, daß das obere Lenksäulenteil (22) ein im wesentlichen U-förmig ausgebildetes Konsolenteil (26) enthält, welches im wesentlichen senkrecht zur Drehachse (24) ausgerichtet ist und an dem Führungsmittel für die Sperrklinke (80) befestigt sind.

3. Schwenkmechanismus nach Anspruch 1 oder 2, dadurch gekennzeichnet, daß die Sperrklinke (80) eine lenksäulenseitige Verzahnung (84) trägt und durch Führungsmittel an dem oberen Lenksäulenteil (22) oder dem Konsolenteil (26) parallel zur Lenksäule verschiebbar geführt und durch eine Handhabe (96) gegen die Kraft einer Feder (98) derart betätigbar ist, daß sich die lenksäulenseitige Verzahnung (84) von der fahrzeugaufbauseitigen Verzahnung (58) abhebt.

4. Schwenkmechanismus nach einem der Ansprüche 1 bis 3, dadurch gekennzeichnet, daß die Oberfläche des Segmentteils (50), in der sich die Verriegelungsausnehmung (64) befindet, gegenüber der Oberfläche liegt, die die Verzahnung (58) trägt.

5. Schwenkmechanismus nach einem der Ansprüche 1 bis 4, dadurch gekennzeichnet, daß das Segmentteil (50) eine weitere benachbart zum zweiten Widerlager (67) angeordnete Verriegelungsausnehmung (62) aufweist, in die das Verriegelungsteil (100) eingreift, wenn sich das obere Lenksäulenteil (22), das Segmentteil (50) und gegebenenfalls das Konsolenteil (26) in ihrer oberen Grenzposition befinden.

6. Schwenkmechanismus nach einem der Ansprüche 1 bis 5, dadurch gekennzeichnet, daß das Konsolenteil (26) oder das Segmentteil (50) wenigstens einen bogenförmigen Schlitz (38) aufweist und daß von dem anderen der beiden Teile (26, 50) wenigstens ein Stift (72) hervorsteht, der verschiebbar in dem Schlitz (38) aufgenommen wird und der mit den Enden des Schlitzes (38) die relative Bewegung zwischen dem Konsolenteil (26) und dem Segmentteil (50) begrenzt.

7. Schwenkmechanismus nach Anspruch 6, dadurch gekennzeichnet, daß von dem anderen der beiden Teile (26, 50) zwei Stifte (72) hervorstehen, die verschiebbar von dem Schlitz (38) aufgenommen werden und je mit einem der Enden des Schlitzes (38) die relative Bewegung zwischen dem Konsolenteil (26) und dem Segmentteil (50) begrenzen.

8. Schwenkmechanismus nach einem der Ansprüche 2 bis 7, dadurch gekennzeichnet, daß das Konsolenteil (26) eine Lagerbüchse (27), durch die sich die Lenkspindel (14) erstreckt, und zwei Seitenwangen (30, 32) enthält, daß die beiden Seitenwangen (30, 32) beidseits der Lagerbüchse (27) angeordnet sind und sich im wesentlichen parallel zur Lenkspindelachse erstrecken, daß jede der Seitenwangen (30, 32) Tragmittel zur drehbaren Lagerung das Konsolenteils (26) um die Drehachse (24) aufweist und daß die Lagerbüchse (27) und eine der Seitenwangen (30) einen Kanal (42) bilden, in dem das Segmentteil (50) verschiebbar angeordnet ist.

9. Schwenkmechanismus nach einem der Ansprüche 2 bis 8, dadurch gekennzeichnet, daß das Konsolenteil (26) eine Lagerbüchse (27) enthält, die eine erste Öffnung (28), welche einen Teil der Lenkspindel (14) aufnimmt, und eine zur ersten Öffnung (28) benachbarte zweite Öffnung (36) aufweist und daß die Sperrklinke (80) und das Segmentteil (50) durch die zweite Öffnung (36) miteinander in Eingriff bringbar sind.

## Claims

1. Pivot mechanism for the steering wheel assembly of a vehicle
- with a steering column comprising a lower steering column portion (20) fixed to the vehicle and an upper steering column portion (22) pivotable about a horizontal pivot shaft (24) fixed to the lower steering column portion (20),
- with a latching device including a segment portion (50) with teeth (58) which is coupled to the lower steering column portion (20), as well as a locking pawl (80) which can be brought into engagement with these teeth (58) manually and is coupled to the upper steering column portion (22), such that by operation of the locking pawl (80) the latter can be moved to and from the teeth (58) of the segment portion (50) in order to fix the upper steering column portion (22) selectively in different pivot positions relative to the segment portion (50),
- and with a locking device by which the upper steering column portion (22) can be fixed releasably in at least one pivot position and on release of which, even when the latching device is engaged, the upper steering column portion (22) can be pivoted relative to the lower steering column portion (20) within a given pivot range, characterised in that
- the segment portion (50) comprises a first abutment (69) and a second abutment (67) spaced apart from the latter in the pivot direction as well as at least one locking recess (64) which is arranged adjacent to the first abutment (69),
- the locking device contains a locking portion (100) which can be moved by an operator to and from the segment portion (50) and which cooperates with the abutments (67, 69) and the locking recess (64) to keep the segment portion (50) within the given pivot range and in selected pivot positions, and
- spring means (48) are provided, which force the segment portion (50) and the upper steering column portion (20), which is latched to the latter by the latching device, out of a normal position in which the locking portion (100) engages in the locking recess (64), into a limit position in which the locking portion (100), which has been pulled out of the locking recess (64), abuts against the second abutment (67).

2. Pivot mechanism according to claim 1, characterised in that the upper steering column portion (22) contains an essentially U-shaped bracket portion (26) which is oriented essentially perpendicularly to the pivot shaft (24) and attached to the guide means for the locking pawl (80).

3. Pivot mechanism according to claim 1 or 2, characterised in that the locking pawl (80) carries teeth (84) on the steering column side and is guided by guide means on the upper steering column portion (22) or the bracket portion (26) so as to allow sliding parallel to the steering column and can be operated by a handle (96) against the force of a spring (98) such that the teeth (84) on the steering column side lift off the teeth (58) on the vehicle body side.

4. Pivot mechanism according to any of claims 1 to 3, characterised in that the surface of the segment portion (50) in which is located the locking recess (64) is located opposite the surface which carries the teeth (58).

5. Pivot mechanism according to any of claims 1 to 4, characterised in that the segment portion (50) comprises a further locking recess (62) which is arranged adjacent to the second abutment (67) and in which the locking portion (100) engages when the upper steering column portion (22), the segment portion (50) and, if occasion arises, the bracket portion (26) are in their upper limit position.

6. Pivot mechanism according to any of claims 1 to 5, characterised in that the bracket portion (26) or the segment portion (50) comprises at least one arcuate slot (38) and in that from the other of the two portions (26, 50) at least one pin (72) projects, which is held slidably in the slot (38) and which with the ends of the slot (38) limits the relative movement between the bracket portion (26) and the segment portion (50).

7. Pivot mechanism according to claim 6, characterised in that from the other of the two portions (26, 50) two pins (72) project, which are held slidably by the slot (38) and each with one of the ends of the slot (38) limit the relative movement between the bracket portion (26) and the segment portion (50).

8. Pivot mechanism according to any of claims 2 to 7, characterised in that the bracket portion (26) contains a bearing bush (27) through which the steering spindle (14) extends, and two side plates (30, 32), in that the two side plates (30, 32) are arranged on both sides of the bearing bush (27) and extend essentially parallel to the steering spindle axis, in that each of the side plates (30, 32) comprises carrying means for rotatably mounting the bracket portion (26) about the pivot shaft (24) and in that the bearing bush (27) and one of the side plates (30) form a channel (42) in which the segment portion (50) is arranged slidably.

9. Pivot mechanism according to any of claims 2 to 8, characterised in that the bracket portion (26) contains a bearing bush (27) comprising a first opening (28) which receives part of the steering spindle (14) and a second opening (36) adjacent to the first opening (28) and in that the locking pawl (80) and the segment portion (50) can be brought into engagement with each other through the second opening (36).

## Revendications

1. Mécanisme de pivotement pour l'ensemble de volant de direction d'un véhicule,
- avec une colonne de direction qui présente une partie inférieure (20) de colonne de direction, solidaire du véhicule, et une partie supérieure (22) de colonne de direction, pivotante autour d'un axe de rotation horizontal (24) fixé à la partie inférieure (20) de colonne de direction,
- avec un dispositif à crans, qui comprend une pièce en forme de segment (50) accouplée à la partie inférieure (20) de la colonne de direction et pourvue d'une denture (58), ainsi qu'un cliquet d'arrêt (80) qui est accouplé à la partie supérieure (22) de la colonne de direction et peut être amené manuellement en engagement avec la denture (58), de telle sorte que, par l'actionnement du cliquet d'arrêt (80), celui-ci peut être déplacé sur la denture (58) du segment (50) pour s'en rapprocher ou s'en éloigner, afin d'immobiliser sélectivement la partie supérieure (22) de la colonne de direction dans différentes positions de pivotement par rapport au segment (50),
- et avec un dispositif de verrouillage, qui permet d'immobiliser de façon détachable la partie supérieure (22) de la colonne de direction dans au moins une position de pivotement, et qui permet lors de son déverrouillage, même si le dispositif à crans est engagé, de faire pivoter la partie supérieure (22) de la colonne de direction dans une plage de pivotement définie par rapport à la partie inférieure (20) de la colonne de direction,
**caractérisé**
- en ce que le segment (50) présente une première butée (69) et une seconde butée (67) distante de la première dans la direction de pivotement, ainsi qu'au moins un évidement de verrouillage (64) qui est disposé au voisinage de la première butée (69),
- en ce que le dispositif de verrouillage comprend une pièce de verrouillage (100), qui peut être déplacée sur le segment (50) par un opérateur pour en être rapprochée ou éloignée et qui coopère avec les butées (67, 69) et l'évidement de verrouillage (64) pour maintenir le segment (50) dans la plage de pivotement définie et dans des positions de pivotement sélectionnées,
- et en ce qu'il est prévu des ressorts (48) qui contraignent le segment (50) et la partie supérieure (22) de la colonne de direction maintenue en engagement avec ce segment par le dispositif à crans, à se déplacer d'une position normale, dans laquelle la pièce de verrouillage (100) s'engage dans l'évidement de verrouillage (64), jusqu'à une position limite dans laquelle la pièce de verrouillage (100) est sortie de l'évidement de verrouillage (64) et s'applique contre la seconde butée (67).

2. Mécanisme de pivotement selon la revendication 1, **caractérisé** en ce que la partie supérieure (22) de la colonne de direction comprend une console (26) sensiblement en forme d'U, qui est orientée sensiblement perpendiculairement à l'axe de rotation (24) et sur laquelle sont fixés des moyens de guidage pour le cliquet d'arrêt (80).

3. Mécanisme de pivotement selon la revendication 1 ou 2, **caractérisé** en ce que le cliquet d'arrêt (80) porte une denture (84) du côté de la colonne de direction et est guidé à coulissement par des moyens de guidage parallèlement à la colonne de direction sur la partie supérieure (22) de la colonne de direction ou la console (26), une manette (96) permettant d'actionner le cliquet d'arrêt (80) en antagonisme à la force d'un ressort (98), de telle sorte que la denture (84), qui se trouve du côté de la colonne de direction, se dégage de la denture (58) qui se trouve du côté de la carrosserie du véhicule.

4. Mécanisme de pivotement selon l'une quelconque des revendications 1 à 3, **caractérisé** en ce que la surface du segment (50) dans laquelle est ménagé l'évidement de verrouillage (64) se trouve à l'opposé de la surface qui porte la denture (58).

5. Mécanisme de pivotement selon l'une quelconque des revendications 1 à 4, **caractérisé** en ce que le segment (50) présente un autre évidement de verrouillage (62), disposé au voisinage de la seconde butée (67) et dans lequel s'engage la pièce de verrouillage (100) lorsque la partie supérieure (22) de la colonne de direction, le segment (50) et, le cas échéant, la console (26) se trouvent dans leur position limite supérieure.

6. Mécanisme de pivotement selon l'une quelconque des revendications 1 à 5, **caractérisé** en ce que la console (26) ou le segment (50) présente au moins une fente (38) en forme d'arc et en ce qu'au moins une goupille (72) fait saillie de l'autre de ces deux pièces (26, 50), est reçue à coulissement dans la fente (38) et limite, conjointement avec les extrémités de la fente (38), le mouvement relatif entre la console (26) et le segment (50).

7. Mécanisme de pivotement selon la revendication 6, **caractérisé** en ce que deux goupilles (72) font saillie de l'autre des deux pièces (26, 50), sont reçues à coulissement par la fente (38) et limitent chacune conjointement avec l'une des extrémités de la fente (38) le mouvement relatif entre la console (26) et le segment (50).

8. Mécanisme de pivotement selon l'une quelconque des revendications 2 à 7, **caractérisé** en ce que la console (26) comprend un coussinet (27) que traverse l'arbre de direction (14), et deux joues latérales (30, 32), en ce que les deux joues latérales (30, 32) sont disposées de part et d'autre du coussinet (27) et s'étendent sensiblement parallèlement à l'axe de l'arbre de direction, en ce que chacune des joues latérales (30, 32) présente des moyens de support pour supporter à rotation la console (26) autour de l'axe de rotation (24) et en ce que le coussinet (27) et l'une des joues latérales (30) forment un canal (42) dans lequel est disposé à coulissement le segment (50).

9. Mécanisme de pivotement selon l'une quelconque des revendications 2 à 8, **caractérisé** en ce que la console (26) comprend un coussinet (27) qui présente une première ouverture (28), qui reçoit une partie de l'arbre de direction (14), et une seconde ouverture (36) voisine de la première ouverture (28), et en ce que le cliquet d'arrêt (80) et le segment (50) peuvent être amenés en engagement mutuel au travers de la seconde ouverture (36).
